# EUROPÄISCHE PATENTSCHRIFT

(11) **EP 1 556 190 B1**
(45) Veröffentlichungstag und Bekanntmachung des Hinweises auf die Patenterteilung: **14.12.2005**
(21) Anmeldenummer: 03758044.6
(22) Anmeldetag: 23.10.2003
(51) Int. Cl.: B25J 9/00, G05B 19/418

(54) **ANLAGE UND VERFAHREN ZUM BEARBEITEN VON KAROSSERIETEILEN, WOBEI ROBOTER MIT EINEM FÖRDERBAND SYNCHRONISIERT WERDEN**
SYSTEM AND METHOD FOR MACHINING BODY PARTS, WHEREIN ROBOTS ARE SYNCHRONISED WITH A CONVEYOR BELT
SYSTEME ET PROCEDE POUR USINER DES PARTIES DE CARROSSERIE, DES ROBOTS ETANT SYNCRHONISES AVEC UN CONVOYEUR A BANDE

(30) Priorität: 28.10.2002 DE 20216636 U
(43) Veröffentlichungstag der Anmeldung: 27.07.2005
(73) Patentinhaber: KUKA Schweissanlagen GmbH, 86165 Augsburg (DE)
(72) Erfinder: WIEDEMANN, Gerhard, 86836 Graben (DE); GRIEGER, Helmut, 86438 Kissing (DE); DRAKE, Larry, Clarkston, MI 48348 (US)
(74) Vertreter: Ernicke, Hans-Dieter
(86) Internationale Anmeldenummer: PCT/EP2003/011729
(87) Internationale Veröffentlichungsnummer: WO 2004/037496

(56) Entgegenhaltungen:
- WO-A-03/034165
- DE-A- 2 234 759
- DE-A- 3 319 169
- DE-A- 10 102 758
- US-A- 4 254 433
- DIRNDORFER A: "INDUSTRIEROBOTER ZUR FOERDERBANDSYNCHRONEN MONTAGE" ROBOTERSYSTEME, SPRINGER VERLAG. BERLIN, DE, Bd. 8, Nr. 1, 1992, Seiten 44-48, XP000266177

## Beschreibung

Die Erfindung betrifft ein Bearbeitungsverfahren und eine Bearbeitungsanlage, insbesondere eine Fügeanlage mit den Merkmalen im Oberbegriff des Verfahrens- und Vorrichtungshauptanspruchs.

Derartige Fügeanlagen für den Karosserierohbau sind aus der Praxis bekannt. Sie bestehen aus einem taktweise arbeitenden Förderer für die Werkstücke, der z.B. als Hubshuttle ausgebildet ist. Die Fügeanlage ist hierbei in mehrere entlang des Förderers bzw. der Transferlinie angeordnete Stationen unterteilt, in denen am ruhenden Werkstück unterschiedliche Fügeaufgaben von Robotern durchgeführt werden, welche in den Stationen jeweils an ein oder mehreren Seiten der Transferlinie stationär angeordnet sind. Diese Bauweise hat den Nachteil, dass eine relativ hohe Zahl an Robotern erforderlich ist, wobei die Roboter und auch die Werkzeuge nicht optimal ausgelastet werden. Durch die Stationsbindung und die Arbeit am ruhenden Werkzeug besteht eine feste Taktzeitbindung, wobei außerdem die Roboter nur einen begrenzten Arbeitsbereich haben. In den Gesamttakt der Fügeanlage geht neben der Arbeitszeit auch die Transportzeit maßgeblich ein, was auf die Effizienz drückt. Durch die Stationsbindung besteht ferner an den Stationsübergängen ein erhöhter Abstand zwischen den Robotern, was den Platzbedarf erhöht. Nachdem die Roboter am stehenden Werkstück nur Teilbereiche bearbeiten, müssen für gleichartige Aufgaben an der Vorder- und Rückseite des Werkstücks mehrere Roboter und auch mehrere gleichartige Werkzeuge eingesetzt werden.

Aus der DE 195 20 582 C1 ist eine Montage an bewegten Karosserien bekannt. Der Montageroboter bewegt sich in diesem Fall auf einer zusätzlichen Fahrachse in Transportrichtung synchron mit der Karosserie und ist hierzu an den Karosserieförderer gekoppelt. Nach Beendigung des Montagejobs muss der Roboter wieder in seine Ausgangsposition zurückfahren. Dies bringt einen erhöhten Platzbedarf in Förderrichtung mit sich. Zudem können nicht mehrere Roboter eng nebeneinander in Förderrichtung aufgereiht sein.

Die DE 35 16 284 A1 befasst sich ebenfalls mit der Durchführung von Montagearbeiten an einer bewegten Fahrzeugkarosserie. Auch hier sind Montageroboter mit einer zusätzlichen Linearachse vorhanden, die sich mit dem geförderten Fahrzeug synchron mitbewegen und nach Beendigung des Jobs zurückfahren müssen.

Die DE 199 31 676 C2 lehrt das Vermessen einer Karosserie, die während des Messvorganges stationär ruht. Der Messroboter hat eine zusätzliche Linearachse, mit der er seine Arbeits-Grundposition verändern kann. Am neuen Messort muss er sich über stationäre Kalibriermarken wieder einnullen.

Bei der DE 101 36 691 A1 geht es um die Kompensation von Positionsfehlern eines Roboters mittels eines Laser-Messinstruments. Dies ist lediglich ein Kalibriervorgang. Mit dem Messinstrument können zudem noch ein Schweißwerkzeug und ein Werkstück angemessen und kalibriert werden, was den Kalibriervorgang vereinfacht und beschleunigt.

Die DE 24 30 058 A1 offenbart ein Positions-Messsystem für Roboterglieder und dient dem Einmessen und Kalibrieren eines Roboters unter Kompensation seiner Achsenfehler.

Die US 4 254 433 A1 offenbart eine Fügeanlage für den Karosserierohbau, wobei Werkstücke von einem Förderer kontinuierlich transportiert werden, und wobei ein stationär angeordneter mehrachsiger Roboter in seinen Achsbewegungen mit der Förderbewegung mittels einer die Position der Werkstücke erfassenden Sensorik synchronisiert wird. In diesem Dokument werden die Bewegungen des Roboters an die Geschwindigkeit des Förderers angepasst, jedoch wird der Förderer nicht zusammen mit dem Roboter von einem zentralen Steuersystem gesteuert.

Es ist Aufgabe der vorliegenden Erfindung, ein besseres Bearbeitungsverfahren nebst Bearbeitungsanlage und insbesondere Fügeanlage für den Karosserierohbau aufzuzeigen.

Die Erfindung löst diese Aufgabe mit den Merkmalen im Hauptanspruch.
Mit dem beanspruchten Verfahren und der Fügeanlage, die z.B. in der bevorzugten Ausführungsform als sog. Respot-Schweißanlage ausgebildet ist, können eine höhere Effizienz und bessere Auslastung der eingesetzten Roboter und ihrer Werkzeuge erreicht werden. Auch die Stationsbindungen lassen sich aufheben. Der Platzbedarf und der Bauaufwand werden verringert. Die Zahl der eingesetzten Roboter kann wegen ihres in funktioneller und räumlicher Hinsicht vergrößerten Arbeitsbereiches minimiert werden.

Durch den kontinuierlichen Förderer und die Bearbeitung der Werkstücke während der Förderbewegung kann die starre Taktzeitbindung aufgehoben werden. Die Leistung der Fügeanlage wird gesteigert. Die Roboter können entsprechend ihrer Funktion und ihrer Bearbeitungsaufgaben optimal positioniert werden. Überflüssige Freiräume, wie sie bei der bisherigen Stationsbindung vorhanden waren, können vermieden werden. Der Platzbedarf der Fügeanlage sinkt entsprechend.

Für die Synchronisierung der stationär angeordneten Roboter mit der Förderbewegung der Werkstücke ist eine geeignete Sensorik zur Bewegungs- und Positionserfassung der Werkstücke vorhanden, die mit einem beispielsweise übergeordneten oder in eine Robotersteuerung integrierten Steuerungssystem zusammenwirkt. Hierdurch lassen sich zentral der Förderer und die Roboter steuern und synchronisieren. Vorzugsweise ist auch noch ein Überwachungssystem vorhanden, welches die Einhaltung der Synchronisation im Arbeitsbereich der Roboter überwacht und in Zusammenarbeit mit dem zentralen oder dezentralen Steuerungssystem ggf. für eine Nachregelung der Förderbewegung und/oder der Roboterbewegung sorgt.

In den Unteransprüchen sind weitere vorteilhafte Ausgestaltungen der Erfindung angegeben.

Die Erfindung ist in den Zeichnungen beispielsweise und schematisch dargestellt. Im Einzelnen zeigen:
- Figur 1:: eine Bearbeitungsanlage mit einem zentralen Steuerungssystem in einer Schemadarstellung,
- Figur 2:: eine vergrößerte Draufsicht auf die Fügeanlage von Figur 1,
- Figur 3 und 4:: Funktionsdarstellungen von einem Ausschnitt der Fügeanlage von Figur 2 mit synchronisierten Robotern,
- Figur 5:: eine Variante der Fügeanlage von Figur 2 und
- Figur 6:: eine Fügeanlage nach dem Stand der Technik.

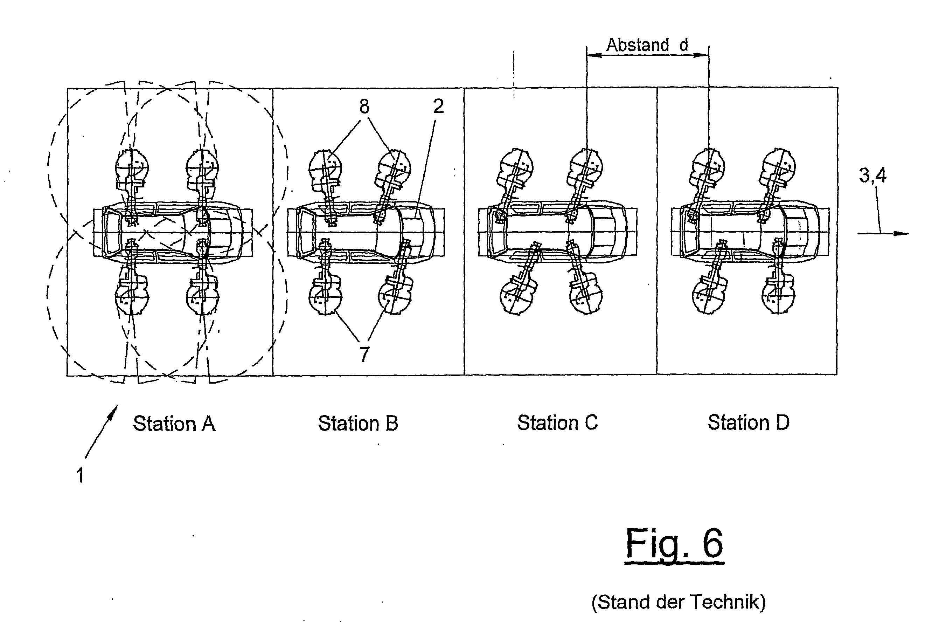

Figur 6 zeigt eine Bearbeitungsanlage (1) für den Karosserierohbau in einer Ausbildung nach dem aus der Praxis bekannten Stand der Technik. Die Bearbeitungsanlage (1) ist als Fügeanlage im Karosserierohbau, insbesondere als Respot-Schweißanlage für Fahrzeugrohkarosserien bzw. Rohkarosserieteile ausgebildet. Sie gliedert sich in mehrere hintereinander entlang einer Transferlinie (3) aufgereihte Stationen A bis D. Die Fahrzeugrohkarosserien (2) werden mittels eines Anlagen übergreifenden Förderers (5) von Station zu Station befördert. Dies ist ein taktweise arbeitender Förderer, z.B. ein Hubshuttle. Für die gesamte Fügeanlage (1) gilt ein fester vorgegebener Arbeitstakt, der sich in Bearbeitungszeiten und Transportzeiten gliedert. Innerhalb der Stationen A bis D sind ein- oder beidseits der Transferlinie (3) ein oder mehrere stationäre Roboter (7,8) angeordnet, die die während der Bearbeitung ruhenden Karosserien (2) fügen, z.B. mit Punktschweißzangen oder anderen Schweißwerkzeugen ausschweißen. Die Roboter (7,8) haben räumlich begrenzte Arbeitsbereiche an der Karosserie (2), wobei auf jeder Seite jeweils ein Roboter (7,8) im vorderen Karosseriebereich arbeitet und jeweils ein anderer Roboter (7,8) im hinteren Karosseriebereich tätig ist. Für gleichartige Tätigkeiten, z.B. Punktschweißen, müssen entsprechend die Werkzeuge, insbesondere Schweißwerkzeuge, mehrfach vorhanden sein.

Zwischen den einzelnen Stationen A bis D wird üblicherweise ein Freiraum gelassen, wobei in diesem Bereich die benachbarten Roboter (7,8) einen größeren Abstand d haben als innerhalb der einzelnen Stationen A bis D. Die vorbekannte Fügeanlage (1) mit dem Stationenkonzept braucht daher erheblich Platz in Transferrichtung und ist durch den strengen Arbeitstakt in ihrer Effizienz nicht optimal.

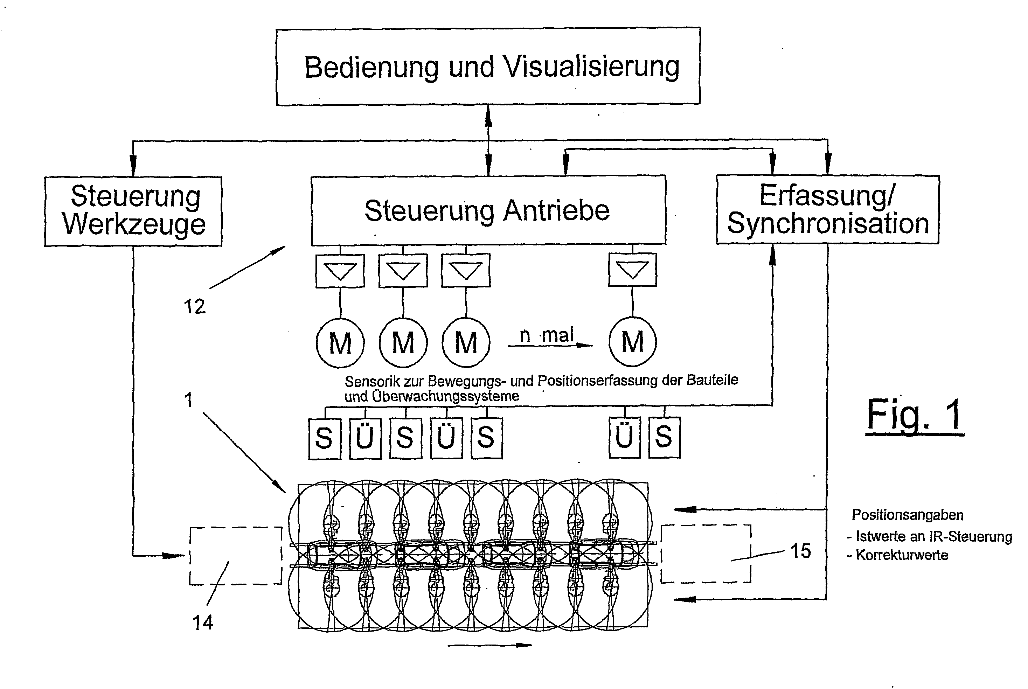

Figur 1 bis 5 zeigen eine erfindungsgemäße Bearbeitungsanlage (1), insbesondere in Form einer Fügeanlage und speziell einer Respot-Schweißanlage. In der Fügeanlage (1) werden ein oder mehrere Förderer (5) eingesetzt, die als kontinuierlich arbeitende Förderer ausgebildet sind und die die Werkstücke (2), insbesondere Fahrzeugrohkarosserien oder Karosserieteile in einer kontinuierlichen und vorzugsweise stetigen Bewegung in Transportrichtung (4) fördern.

Die Förderbewegung kann auf konstante Geschwindigkeit geregelt sein. Alternativ kann die Fördergeschwindigkeit bei Einsatz mehrerer Förderer (5) örtlich variieren und an einzelnen Förderern (5) beschleunigt oder verzögert werden. Hierdurch lassen sich die Abstände der Werkstücke (2) lokal verändern (sog. "atmen" der Werkstücke). Eine Abstandsvergrößerung schafft z.B. Platz im Front- und Heckbereich für dortige Bearbeitungsvorgänge. Mit einer nachfolgenden Verzögerung wird anschließend der ursprüngliche Abstand wieder hergestellt.

Die Werkstücke (2) können direkt auf dem Förderer (5) angeordnet sein. Alternativ können sie auch auf Trägern, insbesondere Paletten (6) in einer vorgegebenen Position gehalten und gespannt sein und mit diesen Trägern (6) transportiert werden.

Der einzelne Förderer (5) kann einteilig sein. Er kann alternativ auch in mehrere Förderabschnitte untergliedert sein. Der Förderer bzw. die Förderabschnitte haben jeweils geeignete steuerbare Antriebe, die in Figur 1 schematisch als Motore M dargestellt sind. Der Förderer (5) kann in beliebig geeigneter Weise als Rollenförderer, Kettenförderer oder dgl. ausgebildet sein.

Die Roboter (7,8) bearbeiten die transportierten Werkstücke (2) während ihrer Förderbewegung. Hierzu sind die Roboterbewegungen mit der Förderbewegung synchronisierbar. Die Roboter (7,8) werden hierbei in Abhängigkeit von Position und Transportgeschwindigkeit der Werkstücke (2) gesteuert. Hierfür hat die Fügeanlage (1) eine geeignete Sensorik (13) zur Bewegungs- und Positionserfassung der Werkstücke (2) und/oder ihrer Träger (6).

Die Roboter (7,8) sind als stationäre Gelenkarmroboter ausgebildet, die während ihrer Tätigkeit mit ihrem Sockel ortsfest am Boden stehen bleiben. Die Roboter (7,8) haben mehrere rotatorische Achsen, vorzugsweise sechs Achsen. Sie sind z.B. als Industrieroboter ausgebildet, bei denen sich auf dem stationären Sockel ein Karussell um die erste vertikale Achse I dreht, wobei am Karussell ein Schwinge um eine horizontale zweite Achse II schwenkbar gelagert ist, an deren Ende ein Ausleger um eine horizontale dritte Achse III schwenkbar gelagert ist. Der Ausleger trägt am Ende eine mehrachsige Roboterhand, vorzugsweise eine sog. Zentralhand mit drei kreuzenden rotatorischen Achsen IV, V und VI. Die vorerwähnte Synchronisation mit der Förderbewegung erfolgt durch einander meist mehrachsig überlagernde Veränderungen der Drehbewegungen der rotatorischen Achsen.

Außerdem ist eine Überwachungseinrichtung (11) vorhanden, um im Prozess die Einhaltung der Synchronisation zu überwachen. Hierfür kann das Überwachungssystem (11) z.B. ein oder mehrere Einrichtungen, insbes. Kameras zur optischen Bilderfassung und Auswertung besitzen. Hierüber lässt sich z.B. feststellen, ob die mit der Förderbewegung synchronisierten Roboter (7,8) mit ihren Werkzeugen (10) tatsächlich synchron mit dem Werkstück (2) während der Fügeoperation und/oder bei ihren Zustell- bzw. Rückstellbewegungen bewegt werden. Außerdem können etwaig drohende Kollisionen von Werkzeugen (10) mit Störkanten am Werkstück (2) festgestellt werden. Auch die kollisionsfreie gegenseitige Abstimmung benachbarter Roboter (7,8) lässt sich überwachen.

Während des Fügeprozesses kann die Einhaltung der Synchronisation auch auf andere Weise, z.B. durch Kräftemessung am Roboter (7,8) und/oder am Werkzeug (10) überwacht werden. Wenn die Roboterbewegung nicht synchron zur Förderbewegung ist, entsteht eine Relativbewegung, die sich in einer Veränderung der im Prozess wirkenden Kräfte äußert, welche wiederum auf die Roboterachsen rückwirken und hier durch Momenten- oder Stromüberwachung der Achsantriebe oder auf andere Weise, z.B. durch Kräfte- und Momentensensoren, feststellbar sind.

Die Roboter (7,8) haben vorzugsweise in ihrer Robotersteuerung ein spezifisches Bearbeitungsprogramm für ihre Operationen am Werkstück (2) gespeichert. Dieses kann z.B. ein auf statischem Betrieb am stehenden Werkstück (2) programmiertes Bearbeitungsprogramm sein, dem bei der Ausführung eine der Förderbewegung entsprechende dynamische Komponente überlagert wird. Bei dieser Überlagerung kann auf evtl. Änderungen in der Fördergeschwindigkeit oder auch der Position der Werkstücke (2) sofort und online reagiert werden.
Alternativ kann das Bearbeitungsprogramm die dynamische Komponente bereits beinhalten und auf eine bestimmte Förderbewegung programmiert sein. In diesem Fall wird bei der Synchronisation überwacht, ob die vorgegebenen Dynamikbedingungen eingehalten sind oder ob eine Nachregelung online erforderlich ist.

Die Fügeanlage (1) besitzt mindestens ein Steuerungssystem (12), welches vorzugsweise zentral und Anlagen übergreifend ist. An das Steuerungssystem (12) sind vorzugsweise alle in der Anlage (1) befindlichen Roboter (7,8) angeschlossen. Auch die Sensorik (13), das Überwachungssystem und die Antriebe des Förderers (5) oder der Förderabschnitte sind an das zentrale Steuerungssystem (12) angeschlossen. Zur Einhaltung der Synchronisation kann von der Förderbewegung und insbesondere der Position und Geschwindigkeit der Werkstücke (2) als Vorgabe ausgegangen werden, wobei die Roboter (7,8) in ihren Arbeits- und Zustellbewegungen entsprechend synchronisiert werden. Hierbei kann auch der Förderer (5) auf eine Vorgabe geregelt werden, insbesondere wenn die Roboter (7,8) bereits dynamisierte Bearbeitungsprogramme in ihrer Steuerung gespeichert haben.

Der Fügeanlage (1) kann auf der Eingangsseite eine Station (14) vorgeschaltet sein, in der der Förderer (5) oder der Träger (6) mit Werkstücken (2) beladen wird. In dieser Station (14) können ferner Spannfunktionen durchgeführt werden, indem z.B. Spanner auf dem Träger (6) durch Anlegen entsprechender Energie- und Steuerverbindungen betätigt werden. Beim Transport durch die Anlage (1) können diese Energie- und Steuerverbindungen wieder gelöst werden. Die Station (14) ist hierfür vorzugsweise auch über eine entsprechende Steuerkomponente mit dem zentralen Steuerungssystem (12) verbunden. Schließlich können in der Station (14) noch Kontrolloperationen durchgeführt werden, um die korrekte Positionierung des Werkstücks (2) auf dem Förderer (5) oder dem Träger (6) sowie die Funktion der Spanner und evtl. weiterer Maschinenkomponenten zu überprüfen.

Auf der Ausgangsseite der Fügeanlage (1) kann eine ähnliche Station (15) vorhanden sein, auf der der Förderer (5) bzw. die Träger (6) von den bearbeiteten Werkstücken (2) entladen werden. Auch hier können noch einmal Kontrolloperationen durchgeführt werden, um abschließend die Einhaltung der korrekten Spannstellung der Werkstücke (2) während des vorhergehenden Anlagendurchlaufs nachträglich zu überprüfen und um ggf. auch eine Qualitätsprüfung der in der Anlage (1) durchgeführten Fügeoperationen vorzunehmen.

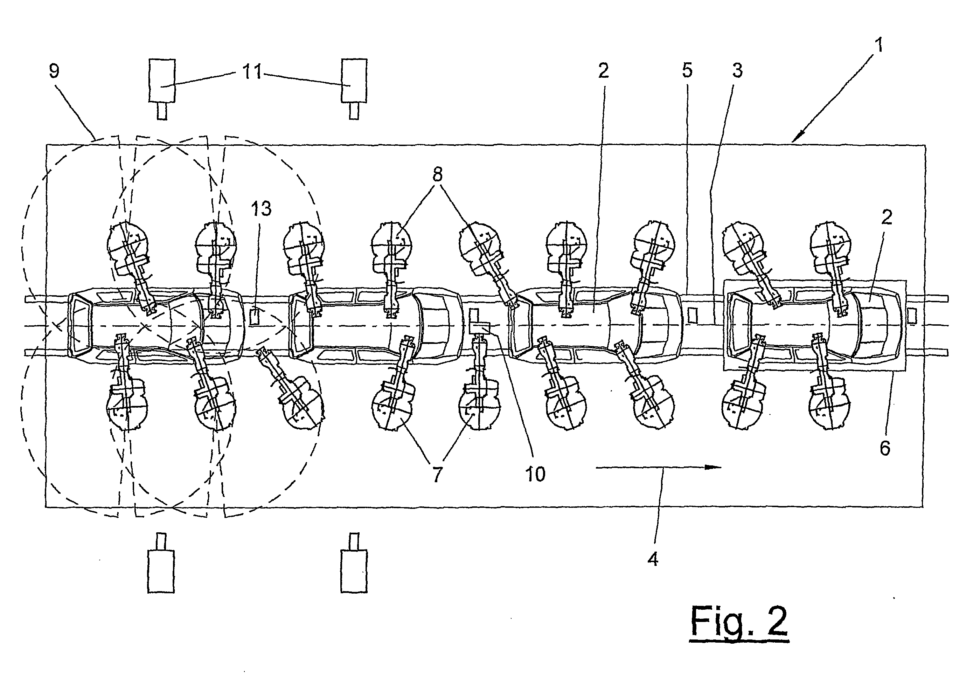

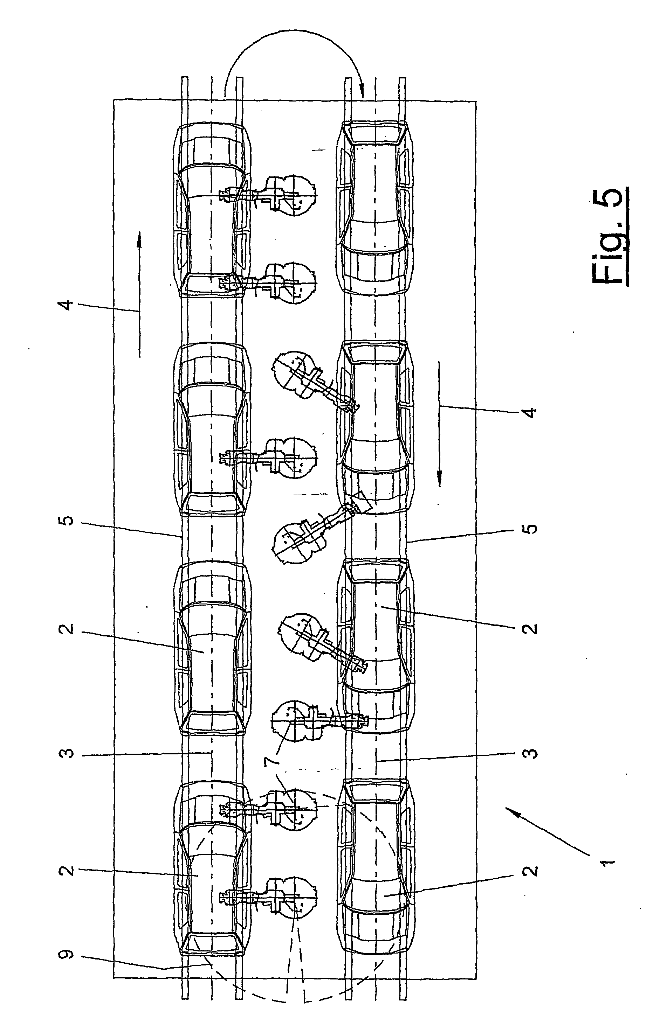

Figur 5 zeigt schematisch eine Variante der Fügeanlage (1) von Figur 2. In Figur 2 sind die Roboter (7,8) zu beiden Seiten der Transferlinie (3) angeordnet, wobei die Werkstücke (2) die Anlage (1) nur einmal und in einer Richtung durchlaufen. In der Variante von Figur 5 werden die Werkstücke (2) in einer Schleife oder einem Kreisverkehr durch einen entsprechend ausgebildeten Förderer (5) bewegt. Hierbei sind nur auf einer Seite der Transferlinie (3) Roboter (7) angeordnet, welche sich zudem zwischen den beiden durch die Schleife oder den Kreisverkehr gebildeten Transferlinien (3) befinden. Die Roboter (7) bearbeiten hierbei auf dem Hinweg die rechte Seite der Fahrzeugteile (2) und auf dem Rückweg deren linke Seite. Die Roboter (7) können dabei abwechselnd nach vorn und hinten arbeiten.

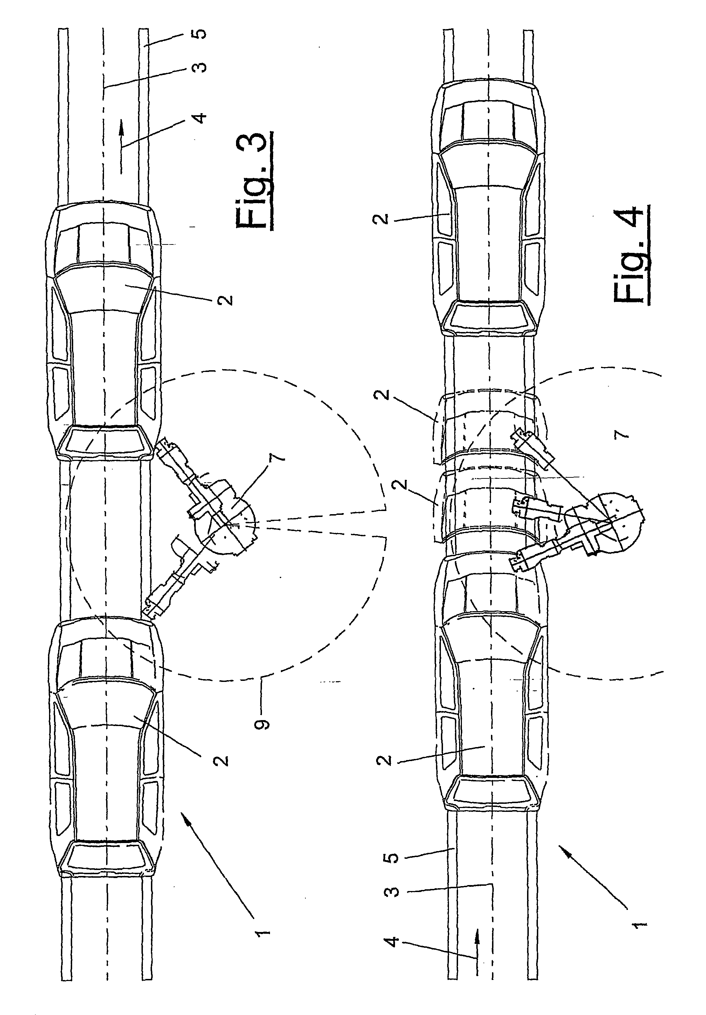

Figur 3 und 4 zeigen in einer Schemadarstellung die synchronisierten Roboteroperationen. Wie Figur 3 verdeutlicht, bearbeitet der Roboter (7) mit seinem nicht dargestellten Werkzeug zunächst den Heckbereich des in Transportrichtung (4) vorn liegenden Werkstücks (2), indem er dort z.B. mehrere Schweißpunkte mit einer Punktschweißzange setzt. Sobald die Operation beendet ist oder das Werkstück (2) den Arbeitsraum (9) des Roboters (7) verlässt, schwenkt der Roboter (7) in die gestrichelt gezeichnete Lage zurück und bearbeitet das nächste mit Abstand folgende Werkstück (2), wobei er Bearbeitungsoperationen an dessen Vorderseite durchführt. Der Roboter (7) kann also an dem vorbeibewegten Werkstück (2) unterschiedliche Bereiche mit entsprechend unterschiedlichen Prozessen bearbeiten.

Die Bearbeitungsoperationen laufen in beliebigen räumlichen Bahnbewegungen ab, wobei die Roboterhand und das Werkzeug mehrachsig bewegt werden. Dementsprechend mehrachsig ist die Synchronisation der Achsbewegungen der Roboter (7,8). Im Gegensatz zu reinen Montageoperationen, z.B. einer seitlichen Rädermontage am Fahrzeug, bei denen der Roboter das eigenbewegliche Werkzeug, z.B. einen Schrauber, nur mit einfacher Kinematik auf einer geraden Bahn synchron entlang der Förderrichtung bewegen muss und das Werkzeug die quer gerichteten Montageoperationen mit einem eigenen Antrieb und ohne Beanspruchung von Roboterachsen selbst durchführt, bedarf es bei den vorliegenden komplexen Bearbeitungsoperationen und dem optimierten Zusammenspiel von mehreren nebeneinander stehenden Robotern (7,8) einer wesentlich komplizierteren Kinematik. Die Roboterbewegungen und deren Synchronisation richten sich nach den Prozess- und Bauteilerfordernissen.

Eine quer oder schräg zur Förderrichtung und u.U. auch noch mit vertikaler Komponente verlaufende Bearbeitungsbahn, z.B. Schweiß- oder Klebenaht, Schweißpunktlinie etc., verlangt bei der Bahnverfolgung mit einem robotergeführten Schweißwerkzeug bei jedem Richtungswechsel eine geänderte Synchronisation der Achsbewegungen. Dies geht über ein reines gerades Mitführen entlang der Förderrichtung hinaus, weil die vom Roboter (7,8) und seinem Werkzeug verfolgte Bahn räumlich und mit beliebig wechselnden Richtungen und Krümmungen verläuft.

Der Roboter (7) kann während der Bearbeitung auch das Werkzeug ggf. wechseln. Der Roboter ist hierdurch optimal ausgelastet, wobei auch die eingesetzten Werkzeuge (10) besser ausgelastet und in ihrer Anzahl optimiert werden. Auf diese Weise können gleichartige Fügeoperationen von einem Roboter (7) an der gesamten ihm zugewandten Seite des vorbei bewegten Werkstücks (2) durchgeführt werden. Der Roboter (7) kann z.B. in Figur 3 alle oder zumindest einen Großteil der Schweißpunkte auf der rechten Seite der Fahrzeugkarosserie (2) setzen.

Wie Figur 1 und 2 verdeutlichen, sind die Roboter (7,8) entlang der Transferlinie (3) untereinander im Wesentlichen mit gleichem Abstand angeordnet. Die Arbeitsbereiche der Roboter (7) an den Werkstücken (2) lassen sich hierbei gegenüber vorbekannten Anlagen vergrößern, so dass weniger Roboter (7,8) benötigt werden. Der Abstand der Roboter (7,8) entlang der Transferlinie (3) lässt sich optimieren und nach den Prozessbedürfnissen einstellen. Starre Abmessungen und Abstandsbindungen wie beim Stand der Technik gem. Figur 6 gibt es nicht mehr. Bei der erfindungsgemäßen Fügeanlage (1) fällt außerdem vorzugsweise die Stationsbindung weg, so dass die bisherigen Sicherheits- und Freiräume zwischen den Stationen entbehrlich sind. Entsprechend dichter können die Roboter (7,8) angeordnet werden. Die Anlagenlänge verkürzt sich entsprechend.

Figur 4 verdeutlicht in einer anderen Ansicht die synchronisierte Bewegung der Roboter (7,8) mit dem Werkstücktransport. Der Roboter (7) schweißt z.B. beim von links ankommenden Werkstück (2) zunächst Bereiche am Vorbau der Karosserie. Während des kontinuierlichen Werkstücktransports dreht sich der Roboter (7) um seine vertikale Sockelachse I mit und ändert auch ggf. die anderen Achspositionen, um so z.b. eine Reihe von Schweißpunkten am Vorbau zu setzen. Durch entsprechende Achsbewegung bewegt sich der Roboter (7) hierbei auch während der Schweißoperationen mit geschlossener Schweißzange synchron mit dem Karosserieteil (2). Die Zustellbewegung zum nächsten Schweißpunkt findet ebenfalls synchronisiert statt. Figur 4 zeigt in gestrichelten und abgebrochenen Darstellungen den Vorschub des Karosserieteils und die entsprechenden synchronen Nachführbewegungen des Roboters (7). Das Werkstück (10) ist der Übersicht halber nicht dargestellt. Auch die Nachführposition des Roboters (7) sind zur besseren Übersichtlichkeit abgebrochen und teilweise dargestellt.

Die Roboter (7, 8) sind stationär und in einer bevorzugten Ausführungsform am Boden und auf ein oder beiden Seiten der Transferlinie (3) bzw. des Förderers (5) angeordnet. Zusätzlich können Roboter an einem innerhalb der Anlage (1) befindlichen Gestell oder Portal angeordnet sein. In weiterer Abwandlung können die Roboter ein oder mehrere Zusatzachsen, z.B. eine entlang der Transferlinie (3) ausgerichtete Fahrachse besitzen.

Abwandlungen der gezeigten Ausführungsformen sind in verschiedener Weise möglich. Dies betrifft zum einen die Zahl, Anordnung und Ausbildung der Roboter (7,8). Auch der Förderer (5) und die eingesetzte Sensorik (13) sowie die Überwachungseinrichtung (11) können konstruktiv abgewandelt werden.

Variabel ist ferner das Steuerungssystem (12), welches auch aus mehreren einzelnen Steuerkomponenten bestehen kann. Hierbei ist es außerdem möglich, das Steuersystem (12) ganz oder teilweise in ein oder mehrere Robotersteuerungen zu verlagern, wobei z.B. ein einzelner Roboter (7,8) oder eine Gruppe von Robotern (7,8) den oder die Förderer (5) in seinem oder ihrem Arbeitsbereich steuert. Hierdurch kann die Förderbewegung lokal optimal auf die Prozesserfordernisse oder die Robotereigenschaften abgestimmt werden. Ferner ist es möglich, die zentrale Anlagensteuerung in eine Robotersteuerung zu verlagern.

### BEZUGSZEICHENLISTE

- 1: Bearbeitungsanlage, Fügeanlage
- 2: Werkstück, Fahrzeugkarosserie
- 3: Transferlinie
- 4: Transportrichtung
- 5: Förderer
- 6: Träger, Palette
- 7: Roboter
- 8: Roboter
- 9: Arbeitsraum
- 10: Werkzeug
- 11: Überwachungssystem
- 12: Steuerungssystem
- 13: Sensorik
- 14: Belade-, Spann- und Kontrollstation
- 15: Kontroll- und Entladestation

## Patentansprüche

1. Verfahren zum Bearbeiten, insbesondere zum Fügen von Werkstücken (2) im Karosserierohbau, wobei die Werkstücke (2) von einem Förderer (5) entlang einer Transferlinie (3) transportiert und von mehreren an der Transferlinie (3) stationär angeordneten mehrachsigen Robotern (7,8) bearbeitet werden, **dadurch gekennzeichnet, dass** die Werkstücke (2) kontinuierlich gefördert und während der Förderbewegung von den Robotern (7,8) bearbeitet werden, wobei die Roboter (7,8) in ihren Achsbewegungen mit der Förderbewegung synchronisiert werden und wobei die Bewegung und die Position der Werkstücke (2) mit einer Sensorik (13) erfasst und an ein Steuerungssystem (12) gemeldet werden, welches den Förderer (5) und die Roboter (7,8) steuert.

2. Bearbeitungsanlage, insbesondere Fügeanlage, für den Karosserierohbau, bestehend aus einem Förderer (5) für die Werkstücke (2) und mehrere entlang der Transferlinie (3) stationär angeordneten mehrachsigen Robotern (7,8), **dadurch gekennzeichnet, dass** der Förderer (5) als kontinuierlich arbeitender Förderer ausgebildet ist und die Roboter (7,8) für eine Bearbeitung der bewegten Werkstücke (2) in ihren Achsbewegungen mit der Förderbewegung synchronisierbar sind, wobei die Bearbeitungsanlage (1) eine Sensorik (13) zur Bewegungs- und Positionserfassung der Werkstücke (2) und ein Steuerungssystem (12) aufweist, an das die der Förderer (5), die Sensorik (13) und die Roboter (7,8) angeschlossen sind, wobei das Steuerungssystem (12) den Förderer (5) steuert.

3. Bearbeitungsanlage nach Anspruch 2, **dadurch gekennzeichnet, dass** die Bearbeitungsanlage (1) ein Überwachungssystem (11) für die Synchronisation der Roboterbewegungen aufweist.

4. Bearbeitungsanlage nach Anspruch 2 oder 3, **dadurch gekennzeichnet, dass** das Überwachungssystem (11) ein oder mehrere Einrichtungen zur optischen Bilderfassung und Auswertung aufweist.

5. Bearbeitungsanlage nach Anspruch 2, 3 oder 4, **dadurch gekennzeichnet, dass** das Überwachungssystem (11) an das Steuerungssystem (12) angeschlossen ist.

6. Bearbeitungsanlage nach einem der vorhergehenden Ansprüche, **dadurch gekennzeichnet, dass** die Robotersteuerungen dynamisierte und online mit der Förderbewegung synchronisierbare Bearbeitungsprogramme aufweisen.

7. Bearbeitungsanlage nach einem der vorhergehenden Ansprüche, **dadurch gekennzeichnet, dass** die Roboter (7,8) als mehrachsiger Gelenkarmroboter, vorzugsweise als sechsachsige Industrieroboter, ausgebildet sind.

8. Bearbeitungsanlage nach einem der vorhergehenden Ansprüche, **dadurch gekennzeichnet, dass** die Roboter (7,8) stationär und auf ein oder beiden Seiten der Transferlinie (3) angeordnet sind.

9. Bearbeitungsanlage nach einem der vorhergehenden Ansprüche, **dadurch gekennzeichnet, dass** die Roboter (7,8) mit gleichmäßigen Abständen angeordnet sind.

10. Bearbeitungsanlage nach einem der vorhergehenden Ansprüche, **dadurch gekennzeichnet, dass** der Förderer (5) mehrere Förderabschnitte mit eigenständigen an das Steuerungssystem (12) angeschlossenen Antrieben aufweist.

11. Bearbeitungsanlage nach einem der vorhergehenden Ansprüche, **dadurch gekennzeichnet, dass** die Werkstücke (2) auf Trägern, insbesondere Paletten, angeordnet und gespannt sind.

12. Bearbeitungsanlage nach einem der vorhergehenden Ansprüche, **dadurch gekennzeichnet, dass** die Roboter (7,8) Fügewerkzeuge (10), insbesondere Schweißwerkzeuge, tragen.

13. Bearbeitungsanlage nach einem der vorhergehenden Ansprüche, **dadurch gekennzeichnet, dass** die Bearbeitungsanlage (1) am Eingang eine Belade-, Spann- und Kontrollstation (14) aufweist.

14. Bearbeitungsanlage nach einem der vorhergehenden Ansprüche, **dadurch gekennzeichnet, dass** die Bearbeitungsanlage (1) am Ausgang eine Kontroll- und Entladestation (15) aufweist.

## Claims

1. Method for machining, in particular for assembling, workpieces (2) in the body shell of a vehicle, the workpieces (2) being transported along a transfer line (3) by a conveyor (5) and machined by a plurality of multi-axis robots (7, 8) arranged in a stationary manner on the transfer line (3), **characterized in that** the workpieces (2) are conveyed continuously and are machined by the robots (7, 8) during the conveying movement, the robots (7, 8) being synchronized in their axial movements with the conveying movement and the movement and the position of the workpieces (2) being detected by a sensor system (13) and reported to a control system (12) which controls the conveyor (5) and the robots (7, 8).

2. Machining plant, in particular assembly plant, for the body shell of a vehicle, consisting of a conveyor (5) for the workpieces (2) and a plurality of multi-axis robots (7, 8) arranged in a stationary manner along the transfer line (3), **characterized in that** the conveyor (5) is designed as a continuously operating conveyor and the robots (7, 8) can be synchronized in their axial movements with the conveying movement for the purpose of machining the moving workpieces (2), the machining plant (1) having a sensor system (13) for detecting the movement and position of the workpieces (2) and having a control system (12) to which are connected the conveyor (5), the sensor system (13) and the robots (7, 8), with the control system (12) controlling the conveyor (5).

3. Machining plant according to Claim 2, **characterized in that** the machining plant (1) has a monitoring system (11) for the synchronization of the robot movements.

4. Machining plant according to Claim 2 or 3, **characterized in that** the monitoring system (11) has one or more means for optical image detection and analysis.

5. Machining plant according to Claim 2, 3 or 4, **characterized in that** the monitoring system (11) is connected to the control system (12).

6. Machining plant according to one of the preceding claims, **characterized in that** the robot controls have dynamized machining programs which can be synchronized on-line with the conveying movement.

7. Machining plant according to one of the preceding claims, **characterized in that** the robots (7, 8) are designed as multi-axis jointed-arm robots, preferably as six-axis industrial robots.

8. Machining plant according to one of the preceding claims, **characterized in that** the robots (7, 8) are arranged in a stationary manner and on one or both sides of the transfer line (3).

9. Machining plant according to one of the preceding claims, **characterized in that** the robots (7, 8) are arranged at regular intervals.

10. Machining plant according to one of the preceding claims, **characterized in that** the conveyor (5) has a plurality of conveying sections with independent drives connected to the control system (12).

11. Machining plant according to one of the preceding claims, **characterized in that** the workpieces (2) are arranged and clamped on carriers, in particular pallets.

12. Machining plant according to one of the preceding claims, **characterized in that** the robots (7, 8) carry assembly tools (10), in particular welding tools.

13. Machining plant according to one of the preceding claims, **characterized in that** the machining plant (1) has a loading, clamping and monitoring station (14) at the inlet.

14. Machining plant according to one of the preceding claims, **characterized in that** the machining plant (1) has a monitoring and unloading station (15) at the outlet.

## Revendications

1. Procédé d'usinage, notamment d'assemblage bout à bout de pièces (2) dans la construction brute de carrosserie, les pièces (2) étant transportées par un convoyeur (5) le long d'une ligne de transfert (3) et étant usinées par plusieurs robots multiaxes (7, 8) disposés en des endroits fixes au niveau de la ligne de transfert (3), **caractérisé en ce que** les pièces (2) sont transportées continuellement et sont usinées par les robots (7, 8) pendant le mouvement de transport, les mouvements des axes des robots (7, 8) étant synchronisés avec le mouvement de transport et le mouvement ainsi que la position des pièces (2) étant détectés avec un dispositif de détection (13) et signalés à un système de commande (12) qui commande le convoyeur (5) et les robots (7, 8).

2. Équipement d'usinage, notamment équipement d'assemblage bout à bout, pour la construction brute de carrosserie, composé d'un convoyeur (5) pour les pièces (2) et de plusieurs robots multiaxes (7, 8) disposés en des endroits fixes le long de la ligne de transfert (3), **caractérisé en ce que** le convoyeur (5) est réalisé sous la forme d'un convoyeur à fonctionnement continu et les mouvements des axes des robots (7, 8) pour l'usinage des pièces (2) déplacées peuvent être synchronisés avec le mouvement du convoyeur, l'équipement d'usinage (1) présentant un dispositif de détection (13) pour détecter le mouvement et la position des pièces (2) ainsi qu'un système de commande (12) auquel sont raccordés le convoyeur (5), le dispositif de détection (13) et les robots (7, 8), le système de commande (12) commandant le convoyeur (5).

3. Équipement d'usinage selon la revendication 2, **caractérisé en ce que** l'équipement d'usinage (1) présente un système de surveillance (11) pour la synchronisation des mouvements des robots.

4. Équipement d'usinage selon la revendication 2 ou 3, **caractérisé en ce que** le système de surveillance (11) présente un ou plusieurs dispositifs d'acquisition d'image optique et d'interprétation.

5. Équipement d'usinage selon la revendication 2, 3 ou 4, **caractérisé en ce que** le système de surveillance (11) est raccordé au système de commande (12).

6. Équipement d'usinage selon l'une des revendications précédentes, **caractérisé en ce que** les commandes des robots présentent des programmes d'usinage dynamisés et pouvant être synchronisés en ligne avec le mouvement de transport.

7. Équipement d'usinage selon l'une des revendications précédentes, **caractérisé en ce que** les robots (7, 8) sont réalisés sous la forme de robots à bras articulés multiaxes, de préférence sous la forme de robots industriels à six axes.

8. Équipement d'usinage selon l'une des revendications précédentes, **caractérisé en ce que** les robots (7, 8) sont disposés en des endroits fixes et d'un côté ou des deux côtés de la ligne de transfert (3).

9. Équipement d'usinage selon l'une des revendications précédentes, **caractérisé en ce que** les robots (7, 8) sont disposés à intervalles réguliers.

10. Équipement d'usinage selon l'une des revendications précédentes, **caractérisé en ce que** le convoyeur (5) présente plusieurs sections de transport munies de mécanismes d'entraînement autonomes raccordés au système de commande (12).

11. Équipement d'usinage selon l'une des revendications précédentes, **caractérisé en ce que** les pièces (2) sont disposées et serrées sur des éléments porteurs, notamment des palettes.

12. Équipement d'usinage selon l'une des revendications précédentes, **caractérisé en ce que** les robots (7, 8) portent des outils d'assemblage bout à bout (10), notamment des outils de soudage.

13. Équipement d'usinage selon l'une des revendications précédentes, **caractérisé en ce que** l'équipement d'usinage (1) présente à l'entrée une station de chargement, de serrage et de contrôle (14).

14. Équipement d'usinage selon l'une des revendications précédentes, **caractérisé en ce que** l'équipement d'usinage (1) présente à la sortie une station de contrôle et de déchargement (15).
